Europäisches Patentamt

European Patent Office

Office européen des brevets

(19)

(11) Publication number : **0 458 875 B1**

(12) **EUROPEAN PATENT SPECIFICATION**

(45) Date of publication of patent specification :
30.08.95 Bulletin 95/35

(51) Int. Cl.⁶ : **G05B 15/00,** D03D 49/00,
D04B 35/00, // B65H59/00

(21) Application number : 90903633.7

(22) Date of filing : 15.02.90

(86) International application number :
PCT/SE90/00100

(87) International publication number :
WO 90/09625 23.08.90 Gazette 90/20

(54) ARRANGEMENT FOR CONTROLLING YARN FEED ELEMENTS/YARN FEED FUNCTIONS IN OR ON A TEXTILE MACHINE.

(30) Priority : 16.02.89 SE 8900534

(43) Date of publication of application :
04.12.91 Bulletin 91/49

(45) Publication of the grant of the patent :
30.08.95 Bulletin 95/35

(84) Designated Contracting States :
BE CH DE IT LI NL SE

(56) References cited :
EP-A- 278 802
EP-A- 302 364
US-A- 3 817 059

(73) Proprietor : IRO AB
Box 54
S-523 01 Ulricehamn (SE)

(72) Inventor : FREDRIKSSON, Lars-Berno
Berggränd 1
S-511 57 Kinna (SE)

(74) Representative : Patentanwälte Grünecker,
Kinkeldey, Stockmair & Partner
Maximilianstrasse 58
D-80538 München (DE)

## Description

The present invention relates to an apparatus according to the preamble part of claim 1.

It is known to provide elements in a textile machine with a computer for control of functions of the elements and it is known to electronically control and supervise functions of the yarn feeders of a weaving machine.

In a controlling and supervising system for a weaving machine group according to EP 0 302 364 A2, subordinate computers are connected within a network to a host computer providing data files for various units and services. The subordinate computer group comprises personal computers which load received data into the various units and devices via the network. Controllers are installed between the weaving machines and the supervisory personal computers for operating and controlling the weaving machine on the basis of data from the supervisory personal computer and for controlling access to input of signals from the weaving machines and data for use in the operation and control of such equipment. Each weaving machine is adapted to then operate by itself independently of the network. It is thus possible to employ distributed processing after the data is down-loaded. Various types of sensors and similar devices monitor the operating conditions. The system is so designed that the signals from the sensors and similar devices are fed back via controllers to the personal computers.

An apparatus for commanding and protecting an industrial process as known from EP 0 278 802 A1 comprises a computerized system with two connection networks for transmission of different types of messages. One connection network is used for complex supervising messages which are transmitted bi-directionally, while the other connection network serves to transmit simpler messages like stop/go command and unidirectionally.

A weaving machine and its yarn feeders represent a large number of functions which have to be individually controlled and supervised and have to be mutually inter-related to achieve an optimum function of the weaving machine. The supervising and/or controlling system must be able to work rapidly and functionally reliably.

It is of great interest to anticipate and measure, in a rapid, effective and supervisory manner, the yarn consumption, which in individual cases is desired to be optimum with the least possible waste.

According to the invention each feeder supplies information regarding its yarn consumption to a central unit. The central unit adds the yarn consumptions of the feeders. The information on total yarn consumption is used to set a maximum limit speed value for the feeders. The information on the total consumption may be transmitted back to all feeders and these adapt themselves to the maximum speed value. Each function unit can be connected to a connection which forms part of the network and at which message transmission within the system takes place serially and digitally. The message transmission consists of message types which are ranked in their priorities. The units and the connections discriminate in the message transmission effected and guarantee a transmission time of a transmitted message of a maximum of 2.0 ms for at least three different messages representing trigger signals. Different types of messages are transmitted with different priorities. Time-critical messages are then not obstructed by other less important messages. Each important message is relatively short and is therefore not obstructed by a longer unimportant message. Optical transmission can be utilized. A digital communication protocol with standardized mechanical and electrical characteristics can be used. Any unit can be connected together with any other.

The message transmission takes place via the serial connection and means that an asynchronous process is carried out in time. Collision between simultaneous transmissions from the units is avoided by message prioritization. Two logic levels can be utilized, one of which is dominant and the other non-dominant. Irrespective of how many of the units transmit a bit which is non-dominant, a dominant bit will be received if a unit transmits a dominant bit at the same time. When a unit starts to transmit, this is detected by all connected units within a predetermined time. By these means, it is ensured that the digital levels of the communication remain stable at the moment when the units read off the bit from the communication. Each unit furthermore interrupts its transmission immediately it detects that the transmission is occupied by one which is transmitting a dominant bit when the unit itself is transmitting a non-dominant bit.

Each unit can comprise a communication control part with at least one first micro-computers and can be connected to a second micro-computer with which functions of the feeder are controllable and/or supervisable. The communication control parts of the feeders can communicate with one another and/or with e.g. a main computer in the system via the digital and serial connection (data bus). The serial bit flow effected by the units at the serial connection proceeds in the form of messages comprising frame and data parts. Said frame comprise bits which are divided up for the transmission and reception functions of the system.

The units can be located physically close to or on their feeders. The units or parts thereof, e.g. said communication control parts, are individually interchangeable with one another.

A predetermined message type (trigger signals) has priority over other messages which are attributable to the continous operation of the feeders and/or the weaving machine. Exchange of a message belonging to

2

EP 0 458 875 B1

the first message type takes place immediately after completion of exchange of a message of the second message type if such is available at the time of transmission of said first message. Furthermore, the bit speed is selected so that said short times for exchange of a message of the first type are available. Times within the range 0.1-1.0 ms are suitable. Bit speeds of e.g. 1 MHz/sec can be used in the system.

At the connection, information is effected from one unit to another unit, or from a main computer. Said information can relate to control information or activation information, which in turn selects or intiates stored control information in the unit concerned, e.g. in its second microcomputer. With the aid of said control information the unit effect control actions of associated yarn feeder. The control actions can control the motor of the feeder depending upon a weaving pattern which is programmed or selected in the computer system of the weaving machine. Each control action can also effect a control of the motor of the feeder in relation to the motors of other feed elements.

In the drawings is :

Figure 1         a skeleton diagram of a part of a weaving machine with a computerized system for control and supervision,
Figure 2         a first type of a message,
Figure 3         another type of message,
Figure 4         a block diagram of the connection of two units to the connection,
Figures 5-7      in diagram form, signal chains illustrating different prioritization principles for the messages,
Figure 8         a block diagram of an arrangement of units, and
Figure 9         a block diagram of a weaving machine.

A system as shown comprises two or more yarn feeders on a weaving machine for e.g. weaving free pattern fabric. Multi-colour weaving can be cited as an example. With the usual variable speed control of the yarn winding-on element of each feeder, it is ensured that all feeders procure themselves a yarn stock which permits at every moment a yarn consumption from each feeder which is determined by a weaving pattern, which may be programmed or stored in e.g. a main computer assigned to the feeder system.

The apparatus is utilized to limit the maximum speed of each yarn feeder. All units provide information on the individual yarn consumption to a central unit which can be utilized on or at the weaving machine. The central unit adds the reported individual yarn consumptions and calculates the maximum or total yarn consumption. Since during one pattern report no feeder can have higher consumption than the total consumption, the latter can be used as a maximum speed value limit and is transmitted back to all feeders. By this the maximum speed can be rapidly reduced in all feeders. The reduction can be carried out automatically after mains operation and without communication with the weaving machine, because the feeders can represent an autonomic system in the weaving machine. As stress on the yarn is speed-dependent, it is important that the maximum speed of the motor of each feeder as low as possible.

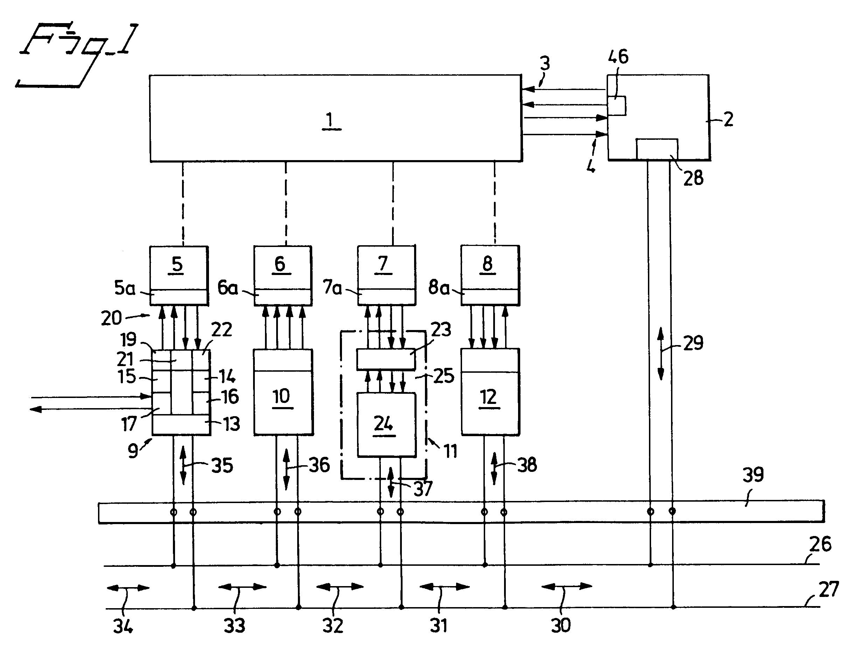

In Figure 1 a textile machine, e.g. a weaving machine like a jet weaving machine, is provided with a computer system 2, by means of which the functions of the machine 1 are controllable and supervisable. Connections 3, 4 between the system to the machine are indicated. Yarn feeders 5, 6, 7 and 8 for weft yarns are connected to the weaving machine 1. The feeders can be of known type. Each feeder has connection parts 5a, 6a, 7a and 8a and a function control unit 9, 10, 11 and 12. The units can be located close to or on the feeders. Each unit 9-12 comprises at least one first micro-computer (or advanced digital circuit) 13, 14 for serial bit flow processing. Memory circuit 15 (RAM, ROM) and a clock circuit 16 are also included. There can also be circuits for time logic, fault processing etc. To a communication port 17 read-in and read-out elements can be connected via connections 18 for entering and retrieval of information, for programming etc. Each unit comprises a second micro-computer 19 effecting the action and supervision of the respective feeder. In the second micro-computer 19, calculations can be carried out for optimum control and supervision of each feeder via the connection 20. The second micro-computer 19 comprises conventional peripherals such as memory circuits 21, communication circuits 22 etc. The connection interface comprises A/D and D/A circuits, communication terminals, pulse outputs etc. The second micro-computer 19 can be integrated in the unit (as shown in unit 9) or alternatively constitute a separate unit. A connection of a second micro-computer 23 in unit 7 is provided to a separate communication control part 24, where communication with one another takes place on a connection interface 25 for parallel communication. Units 9-12 can have essentially identical connection interfaces so that individual interchangeability exists among the units. Any unit then can take the place of another unit, at least after a minor adjustment. In case of separate communication control parts 24 in all units, these can be individually interchanged in corresponding manner.

Each unit 9-12 as the system 2 is connected to a two-wire connection 26, 27 for serial message transmission. The system 2 can comprise one or more control computers 28 (supervising computers) for the units 9-12 which function as slave computers. The units 9-12 can also be arranged for reciprocal communication. Exchange of messages between the control computer and the units or between the units is symbolized with ar-

3

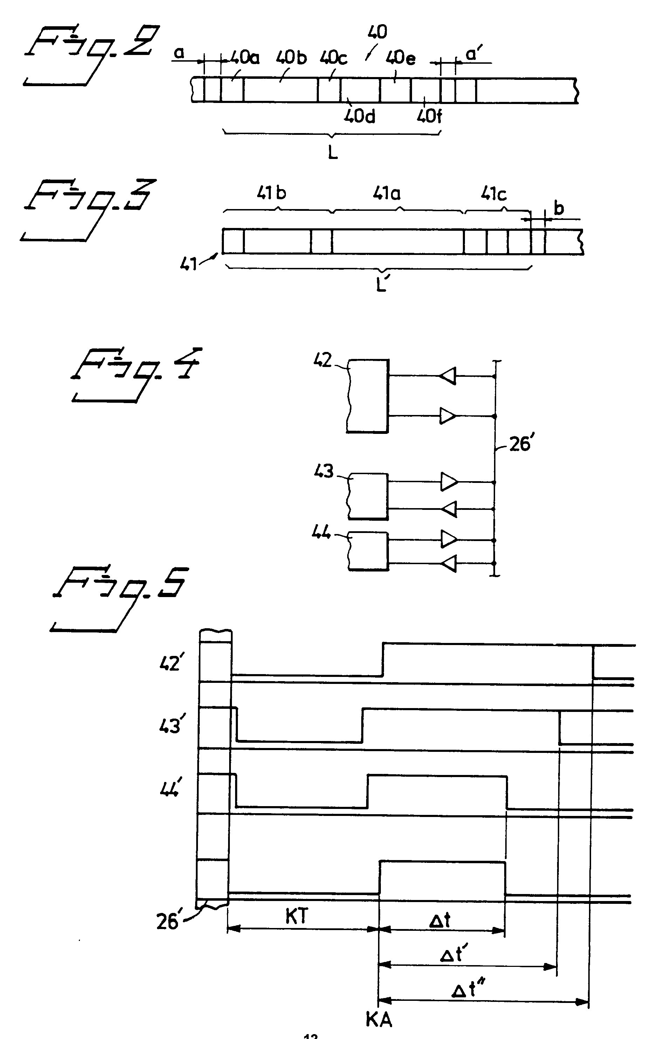

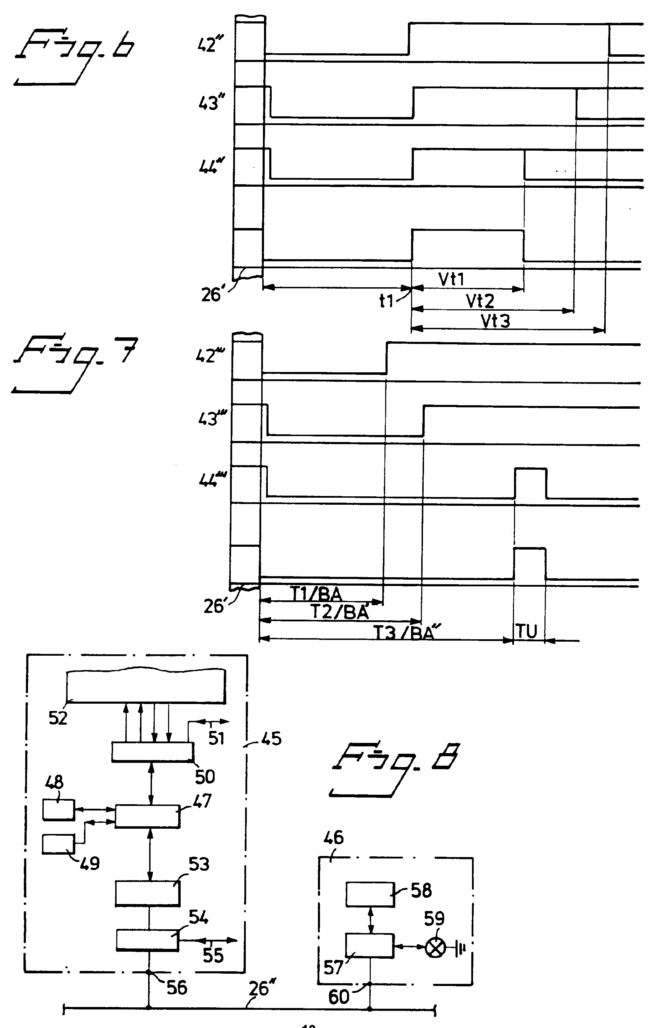

rows 29-38. Terminal elements 39 of each unit can be a pair of screws. Messages of different types can be used. The bit flow in the digital data bus 26, 27 is arranged in the messages which can comprise (Fig 2 and 3) a frame part and a data part. The messages can be executed with markings or addresses for the units. With a supervising computer 28 the system can work with a start-up phase, in which control information is issued for selection of feeder functions, e.g. depending upon a programmed or selected weaving pattern, and a working phase in which the selected feeder function or functions are diagnosed, supervised, controlled and effected. E.g. the yarn quantity can be measured, the thread tension supervised etc.

In case of two or more message types one message type has priority over other message types at the digital serial connection 26, 27. In Figure 2 a first type 40 of message consists of a frame part which has the same length L as the message 40. The frame is constructed of different fields, i.e a start field 40a, a priority field 40b, a control bit field 40c, a total control field 40d, and acknowledgement and completion fields 40e and 40f. The content of the priority field 40b determines the ranking of the message. So called trigger signals have the highest priority. Normal communication messages have priority according to the time requirement. Pick signals, yarn break signals, arrival signals, feeder exchange signal have the highest priorities. Informations regarding the long-term functional working in the textile machine have lower priorities.

A second message type 41 (Figure 3) also comprises a data field 41a. The frame part in message type 41 consists of fields 41b and 41c. The data field 41a contains information which is to be transmitted between the units.

The communication transmission works bit-synchronously. The messages have relatively short lengths L and L′. A message of lower priority does not obstruct a message of higher priority when a unit with a high priority message wishes access to the connection. The message length L′ can be about 0.05 - 0.1 ms (at 1 Mbit/sec). The distances a, a′ and b respectively are selected with great accuracy. Bit speeds of up to e.g. 4 Mbit/sec, can be utilized.

Two different types of logic levels can be used, the first level being a dominant level and consisting of "0" and the second level being a non-dominant level "1".

All units needing access to the connection start to transmit messages as soon as there is a free space at the connection. All messages with lower priority are interrupted. The message with the highest priority is completed. All connected units read the transmitted message. The units are adjusted to receive an assigned message and pick it up and, depending upon the message, carry out the function. A receiving unit can transmit an acknowledgement bit when it considers it has received a correct message. Another possibility is that the receiving unit answers by a message back depending upon a received message.

One to the prioritization transmission of a large amount of information between the units is possible. The transmission is an asynchronous process which is carried out serially in time. Collisions between two different messages have to be prevented. Prioritization can take place in the transmitted message, so that any unit can transmit to any unit. In addition to the system working with two logic levels, all units are capable of detecting within a fixed time when a unit starts to transmit, so that it is ensured that the digital levels in the communication can be made stable at the moment when the units are reading off the bit from the communication. Each unit interrupts its transmission as soon as it detects that the transmission comprises a message with a dominant bit when the unit itself is transmitting a non-dominant bit. The units start transmission in a random manner in time, which makes it extremely improbable that two units start to transmit simultaneously (within the same 100 - 300 ns at a bit frequency of 1 MHz). If transmission takes place simultaneously (within this time-period) selection is made by means of the prioritization.

The waiting time with a maximum transmission speed can be 148 µs (2 x 111 bits) plus the time it takes for the microcomputer to process the information with its program. Minimum transmission time is half of the maximum. By allowing, at sensitive moments, transmission of messages without data, this time can be reduced to 62 µs. The calculations are made with a bit frequency of e.g. 1.5 Mbit/sec. The system can interrupt a transmission by transmitting a fault frame. Then an important message can be transmitted. This reduces the response time to a maximum of 44 and a minimum of 40 µs.

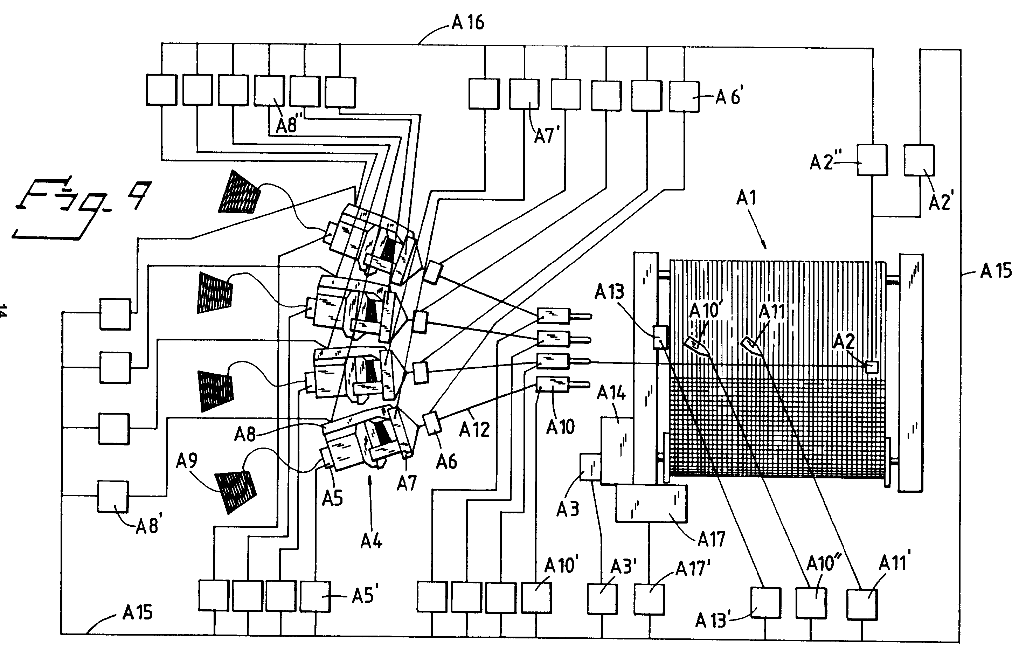

Figure 4 shows three units 42, 43 and 44 at the connection 26′. The following table shows a priority selection. The construction of the priority field can be seen in the table. The message of unit 44 has most dominant bits (levels) and is selected before messages of units 42 and 43.

```
                 priority field          unit
Transmitted:    1000  0000B             42
                0010  0000B             43
                0000  1111B             44
Result:         0000  1111B             44
```

43 has transmitted 1 but received 0 and stopped its transmission

42 has transmitted 1 but received 0 and stopped its transmission.

In another case (not shown) prioritization takes place in one part of the message. Then a "1" indicates a non-dominant level and a "0" a dominant level several bit spaces are provided. When a unit compares the transmitted bit in a bit space with the state received in the communication, the unit notes that the non-dominant bit has been overwritten by a dominant one. The unit interrupts its transmission. At another bit space another unit makes the same observation, for which reason its transmission is interrupted. At a further bit space the last unit notes that it had the highest priority since it never had to interrupt its transmission. This unit consequently completes the message.

Figure 5 shows collision detection with different waiting times $\Delta t$, $\Delta t'$ and $\Delta t''$ after collision. The unit 42' with the longest waiting time $\Delta t''$ receives priority at the connection, whereas the other units must thus wait.

In the event of a simultaneous start there is a slight risk, that one unit does not detect that another unit also is transmitting. After a short time interval, the transmitting unit indicate that their transmission is colliding. A unit detecting this, goes into a fault detecting phase in order to complete the message and indicate to other units that the transmission has collided. Then all units involved transmit a sequence of dominant bits which overlap one another. From a point in time KA, all units wait a predetermined time. The unit with the highest priority waits the shortest time.

Figure 6 shows mechanically guided collision detection. Dominant levels are transmitted first in order to make clear that units wish to transmit. The units 42", 43" and 44" are assigned different waiting times vt1, vt2 and vt3 after all units have transmitted their dominant bits. The unit (42") with the shortest waiting time (vt1) gains priority. The edges of the pulse trains must be kept to the time t1 with great accuracy (e.g. 100 nanosec).

In Figure 6 the functions differs in that the units do not start to transmit without starting with a sequence which indicates a collision. A collision is thus signalled irrespective of whether any other unit is transmitting or not. The prioritization takes place as in Figure 5. The advantage in Figure 6 is that the delay is constant and the collision indication does not need to be carried out. A disadvantage is that the prioritization takes a certain time even only one unit transmits.

Figure 7 shows priority selection for units 42''', 43''' and 44'''. The starting sequence is the number of bits BA, BA' and BA" or times T1, T2 and T3 respectively in the respective message. The message for the unit (44''') with the greatest number (BA") receives priority. The start sequence is used for prioritization. The length of the start sequence varies. The longest start sequence and is the last to stop and gains highest priority. After prioritization, a certain time TU expires to clarify that it is the unit itself which is to transmit. The prioritization times T1, T2 and T3 must be so different in length that they can never be mixed up.

Figure 8 shows units 45 and 46 of different types. Unit 45 is highly intelligent. Unit 46 is of a simpler type. Unit 45 has a microcomputer 47 connected to memory areas 48, 49, (RAM or ROM). The micro-computer 47 works into connection interface 50 with D/A and A/D converters. Also included are counters, pulse outputs and pulse inputs. Connection interface 50 can be provided with a communication terminal 51. It works into an electromechanical part 52 belonging to an element in the textile machine. The microcomputer 47 also works into a communication part 53 (at least one micro-computer) A circuit 54 which in particular configures the unit 45 is provided with inputs and outputs 55. Unit 45 is connected via an output 46 to the digital connection 26". Unit 46 can consist of a communication part 57 connected to one or more transmitter elements 58 and one or more indication elements 59 and/or execution elements 59'. The unit 46 has an output 60 which is connectable to the connection 26".

Figure 9 shows an airjet weaving machine A1, containing arrival detectors A2 and reference transmitters A3 for the machine angle. Four feeders A4 belong to the machine A1. Each feeder A4 is provided with inward and outward thread monitors A5 and A6, with a thread measuring device A7 and a motor control element A8. Each feeder provides a yarn stock A9 of weft yarn A12. A main nozzle A10 and relay nozzles A10' and A11 are arranged in the machine A1, to which cutting elements A13 and a drive A14 belong.

The machine A1 is controlled and supervised by two computerized systems according to the above via serial digital connections A15 and A16. A computerized control system of the weaving machine A1 is indicated with A17.

The active elements are connected to the connections via their units, which have the same reference indications as their associated elements, completed with primes. Some of the elements can share the same unit. Some units e.g motor control elements A8 can be connected to two units e.g. A8', A8". The control unit A17 of the machine is connected via the unit A17' and the arrival detectors A2 are connected to both systems via units A2' and A2".

The system works with a start-up phase and an operation phase. In the start-up phase, each feeder gets an identification number, e.g. by a code. The respective feeder reads its identification code from a supervising unit. The weaving machine informs the system of its breadth and working speed, and further informs the feeders of their coming pick sequence number, e.g. 16, and how much time will run after a reference signal before the feeder has to release yarn. Each feeder prepares itself with the aid of this information by providing an optimum yarn stock and adjusting itself to optimum maximum speed.

The operation phase is started by a weaving machine start signal. Reference transmitter A3 issues reference signals. The feeder whose turn it is to release yarn, counts down the time until the release time and releases yarn. The feeder measures the released yarn length and activates a stop element at the right moment. The arrival monitor A2 confirms the yarn passage. Said sequences are repeated, reckoned from the reference signal of the reference transmitter, and depending upon the length of the sequence. The sequence can be repeated e.g. a further seven times. Thereafter, the weaving machine gives a pick sequence of a number of picks, e.g. eight picks, which are to come after the remaining picks, in this case eight picks, which have already been given. Once again the sequence is repeated from the stage at which a reference signal is received when the reference transmitter A3 is passed. In the operation phase, different types of message according to Figures 2 and 3 are thus called for. The start signal of the weaving machine is a typical trigger signal, as well as signals from the reference transmitter, the activation signals of the feeders for their stop elements, and the signals from the arrival monitor. These signals have, according to the above, priority in the communication transmission system over messages which contain data parts, like speed information. These messages can be stored in memory stacks which work on the first-in-first-out principle. The yarn quantity e.g. can be directly received in these messages.

A data communication connection with a few wires can be utilized, with e.g. two wires for the signal transmission and access to earth (earth conductor) and a screened conductor which prevents interference into and out of the system.

In an important embodiment there is no communication between the weaving machine, e.g, a rapier weaving machine and the feeders. The feeders with their units are then arranged in a network of its own. The positions of the feeders in the network are determined by a code in the connection. The program of the microprocessor in the unit of each feeder responds to a code by which the network position of the feeder is determined in the start-up phase. The determined position can be used for numbering the message which the unit has to transmit or to receive.

In another embodiment the network includes a master unit having a microprocessor provided with the necessary equipments and programs. The master unit has e.g. position 1 in the network, and asks in turn respective feeders about their yarn consumption, and calculates by means of the received informations the entire yarn consumption per time. For each feeder the individual yarn consumption cannot be as large as the entire yarn consumption. The master unit thus commands all feeders to operate with a maximum speed which corresponds to the entire yarn consumption.

In another embodiment the system does not have any master unit. The communication is adapted with the above described priorities. The feeder in position 1 has the highest priority. All units of the feeders have the same software. Each feeder transmits information about its yarn consumption into the connection when a change is detected of the same. After that a period T of silence appears. The following expression is valid:

$$T = t * p$$

in which

$t =$ maximum duration of transmission for messages with highest priority,

$p =$ maximum number of positions to which feeder are connectable.

Each feeder is able to calculate the entire or maximum yarn consumption of its own and adapts its maximum speed (number of revolution of its drive motor) in accordance with that.

In this embodiment, each feeder can be provided with a yarn measuring device on the outlet side for measuring the amount of yarn which is consumed in one pick and the time it takes. The maximum yarn consumption can be calculated by means of the mentioned facts and by means of a default value which indicates the part of the machine revolution during which one pick is fulfilled.

In another embodiment all measured values are transmitted to the serial connection. The feeder instantly calculate the maximum speed value when the next pick occurs. This allows a preciser adjustment of the maximum speed value.

The micro-processor in the unit of one of the feeders can be appointed to the master unit, which questions and controls the other feeder units with respect to the yarn consumption and the speeds of the feeders.

## Claims

1. Apparatus for controlling a group of alternately operating yarn feeders (5-8,A4) in a weaving machine (1,A1) with the aid of a computerized system (2),
   each yarn feeder being adapted to present a yarn stock (A9) for the weaving machine which consumes yarns from the yarn stocks of the feeders in dependence on the pattern of the fabric being produced,
   each feeder having a winding-on element, a speed-controlled drive motor for the winding-on element and a computerized function control unit (9-12,42-44,45,46,A8) connected to the drive motor,
   the drive motor with its function control unit serving to provide and to maintain the individual yarn stock by replenishing the yarn stock within a predetermined motor speed range limited by a maximum speed value and in response to the yarn consumption of the weaving machine,
   **characterised in that**
   the function control units (9-12, 42-46,A8) of all feeders (5-8,A4) are connected to a message transmission and communication network,
   that each function control unit is adapted to generate and to load information on the individual yarn consumption of its feeder into the network,
   and that either each function control unit is adapted to calculate by adding on the basis of the information in the network, the individual yarn consumptions of all feeders in order to gain information about the maximum yarn consumption of the weaving machine and to set the maximum speed value in dependence on the maximum yarn consumption,
   or that a master function control unit is connected to the network, said master function control unit being adapted to receive the information about the individual yarn consumptions of the feeders via the network, further to add the individual yarn consumptions so as to calculate the maximum yarn consumption of the weaving machine, and to feed back information on the maximum yarn consumption via the network to the function control units of all feeders as to set the maximum speed value for all feeders in dependence on the maximum yarn consumption.

2. Apparatus as in claim 1, **characterised in that** one of the function control units (9-12,42-44,45,46,A8) of the feeders is appointed to be the master function control unit in the network.

3. Apparatus as in claim 1, **characterised in that** the master function control unit is provided in the network in addition to the function control units of the feeders of the group.

4. Apparatus as in claims 1 to 3, **characterised in that** at least the master function control unit is provided with at least one microcomputer.

5. Apparatus as in claim 1, **characterised in that** each feeder is provided with a yarn measuring device for measuring its individual yarn consumption, e.g. consumed amount of yarn per time unit, and that the measuring device is connected to the function control unit or the network for providing information about the measured individual yarn consumption of the feeder.

6. Apparatus as in at least one of claims 1 to 5, **characterised in that** each function control unit is connected to a connection (26,27,A16,A17) forming part of the network which is adapted for serial and digital message transmission within the computerized system (2),
   that messages (40,41) transmitted within the system are ranked with different priorities,
   that the units and the connection are adapted to discriminate the message transmission effected and to maintain a transmission time between the function control unit of a maximum of 2.0 ms for at least three different messages with higher priority and with a message length (L) of minimum 0.05 ms at a bit speed up to 4 Mbit/s.

7. Apparatus as in at least one of claims 1 to 6, **characterised in that** the computerized system (2) is programmed with a start-up phase and an operation phase for transmitting an identification number and operational parameters in the start-up phase to the function control unit of each feeder, and for transmitting in the operation phase messages with highest priority as start or trigger signals or movement sensing transmittor messages from the weaving machine, signals for the activiation of stop elements of the feeders and messages from arrival monitors provided in the weaving machine.

**Patentansprüche**

1. Vorrichtung zum Steuern einer Gruppe alternativ operierender Fadenlieferer (5 bis 8, A4) in einer Webmaschine (1, A1) mit Hilfe eines computerisierten Systems (2), wobei jeder Fadenlieferer ausgebildet ist zur Bereitstellung eines Fadenvorrates (A9) für die Webmaschine, die Fäden aus den Fadenvorräten der Fadenlieferer in Abhängigkeit von dem Muster des herzustellenden Gewebes verbraucht,
wobei jeder Fadenlieferer ein Aufwickelelement, einen in seiner Drehzahl gesteuerten Antriebsmotor für das Aufwickelelement und eine computerisierte Funktionssteuereinheit (9 bis 12, 40 bis 44, 45, 46, A8) aufweist, die mit dem Antriebsmotor verbunden ist,
und wobei der Antriebsmotor mit seiner Funktionssteuereinheit zum Bereitstellen und Einhalten des individuellen Fadenvorrats des Lieferers durch Ergänzen des Fadenvorrats innerhalb eines vorbestimmten Motordrehzahlbereiches unter Ansprechen auf den Fadenverbrauch der Webmaschine dient, wobei der Motordrehzahlbereich durch einen maximalen Drehzahlwert begrenzt ist,
**dadurch gekennzeichnet**, daß
die Funktionssteuereinheiten (9 bis 12, 42 bis 46, A8) aller Fadenlieferer (5 bis 8, A4) an ein Nachrichten-Transmissions- und Kommunikationsnetzwerk angeschlossen sind,
daß jede Funktionssteuereinheit ausgebildet ist zum Erzeugen und Abgeben von Informationen zum individuellen Fadenverbrauch seines zugeordneten Fadenlieferers in das Netzwerk,
und daß jede Funktionssteuereinheit ausgebildet ist zum Berechnen durch Addieren der im Netzwerk bereitgestellten Informationen der individuellen Fadenverbrauchswerte aller Fadenlieferer, um eine Information über den maximalen Fadenverbrauch der Webmaschine zu gewinnen und den maximalen Drehzahlwert in Abhängigkeit von dem maximalen Fadenverbrauch festzusetzen,
oder daß an das Netzwerk eine Master-Funktionssteuereinheit angeschlossen und derart ausgebildet ist, daß sie über das Netzwerk die individuellen Fadenverbrauchswerte der Fadenlieferer aufgreift und addiert, um den maximalen Fadenverbrauch der Webmaschine zu berechnen, und die Information über den maximalen Fadenverbrauch über das Netzwerk an die Funktionssteuereinheiten aller Lieferer zurück überträgt, um dort die maximalen Drehzahlwerte für alle Fadenlieferer in Abhängigkeit vom maximalen Fadenverbrauch festsetzen zu lassen.

2. Vorrichtung nach Anspruch 1, **dadurch gekennzeichnet**, daß eine der Funktionssteuereinheiten (9 bis 12, 42 bis 44, 45, 46, A8) der Fadenlieferer als Master-Funktionssteuereinheit in dem Netzwerk bestimmt ist.

3. Vorrichtung nach Anspruch 1, **dadurch gekennzeichnet**, daß die Master-Funktionssteuereinheit in dem Netzwerk zusätzlich zu den Funktionssteuereinheiten der Lieferer der Gruppe vorgesehen ist.

4. Vorrichtung nach den Ansprüchen 1 bis 3, **dadurch gekennzeichnet**, daß zumindest die Master-Funktionssteuereinheit mit wenigstens einem Mikrocomputer ausgestattet ist.

5. Vorrichtung nach Anspruch 1, **dadurch gekennzeichnet**, daß jeder Fadenlieferer mit einer Fadenmeßvorrichtung zum Messen des individuellen Verbrauches des Fadenlieferers versehen ist, z.B. zum Berechnen der pro Zeiteinheit verbrauchten Fadenmenge, und daß die Meßvorrichtung mit der Funktionssteuereinheit oder dem Netzwerk verbunden ist, um dieser bzw. diesem Informationen über den gemessenen individuellen Fadenverbrauch des Fadenlieferers zu geben.

6. Vorrichtung nach wenigstens einem der Ansprüche 1 bis 5, **dadurch gekennzeichnet**, daß jede Funktionssteuereinheit an eine Anschlußverbindung (26, 27, A16, A17) angeschlossen ist und einen Teil des Netzwerks formt, das zu einer seriellen und digitalen Nachrichtenübertragung innerhalb des computerisierten Systems (2) ausgebildet ist,

daß innerhalb des Systems übertragene Nachrichten (40, 41) mit unterschiedlichen Prioritäten versehen bzw. eingeordnet sind, und

daß die Einheiten und die Anschlußverbindung so ausgebildet ist, daß mit Ihnen die bewirkte Nachrichtenübertragung diskriminierbar und eine Übertragungszeit zwischen den Funktionssteuereinheiten mit einem Maximum von 2,0 ms für wenigstens drei unterschiedliche Nachrichten mit höherer Priorität und mit einer Nachrichtenlänge (L) von mindestens 0,05 ms bei einer Bit-Geschwindigkeit bis zu 4 Mbit/s einhaltbar ist.

7. Vorrichtung nach wenigstens einem der Ansprüche 1 bis 6, **dadurch gekennzeichnet**, daß das computerisierte System (2) mit einer Anlaufphase und einer Operations- bzw. Betriebsphase programmiert ist, wobei in der Anlaufphase eine Identifikationsnummer und Operationsparameter an die Funktionssteuereinheit jedes Lieferers übertragbar sind, während in der Operationsphase die folgenden Nachrichten mit höchster Priorität übertragbar sind: Start- oder Auslösesignale, Bewegungsabtast-Transmitter-Signale von der Webmaschine, Signale zum Aktivieren von Steuerelementen der Fadenlieferer, und Signale von Ankunfts-Überwachern, die in der Webmaschine angeordnet sind.

## Revendications

1. Dispositif pour commander un groupe d'alimentateurs de fil (5 à 8, A4) qui travaillent alternativement, dans un métier à tisser (1, A1), à l'aide d'un système informatisé (2),

chaque alimentateur de fil étant adapté pour présenter une réserve de fil (A9) pour le métier à tisser qui consomme les fils provenant des réserves de fil des alimentateurs en fonction du motif du tissu qu'il s'agit de produire,

chaque alimentateur ayant un élément enrouleur, un moteur d'entraînement commandé en vitesse pour l'élément enrouleur et une unité de commande de fonction informatisée (9 à 12, 42 à 44, 45, 46, A8) connectée au moteur d'entraînement,

le moteur d'entraînement, avec son unité de commande de fonction, servant à former et à entretenir la réserve de fil individuelle en regarnissant la réserve de fil dans un intervalle prédéterminé de vitesses du moteur limitée par une valeur maximum de la vitesse et en réponse à la consommation de fil du métier à tisser,

caractérisé en ce que

les unités (9 à 12, 42 à 46, A8) de commande de fonction de tous les alimentateurs (5 à 8, A4) sont connectées à un réseau de transmission de messages et de communication,

en ce que chaque unité de commande de fonction est adaptée pour engendrer une information concernant la consommation individuelle de fil de son alimentateur et à charger cette information dans le réseau,

et en ce que chaque unité de commande de fonction est adaptée pour calculer, par addition sur la base de l'information contenue dans le réseau, les consommations de fils individuelles de tous les alimentateurs pour obtenir une information concernant la consommation de fil maximum du métier à tisser et pour régler la valeur maximum de la vitesse en fonction de la consommation maximum de fil, ou en ce qu'une unité maîtresse de commande de fonction est connectée au réseau, ladite unité maîtresse de commande de fonction étant adaptée pour recevoir l'information concernant les consommations de fil individuelles des alimentateurs à travers le réseau, à ajouter encore les consommations individuelles de fil de manière calculer la consommation de fil maximum du métier à tisser, et renvoyer l'information concernant la consommation de fil maximum en réaction, à travers le réseau, aux unités de commande de fonction de tous les alimentateurs de manière à fixer la valeur maximum de la vitesse pour tous les alimentateurs en fonction de la consommation de fil maximum.

2. Dispositif selon la revendication 1, caractérisé en ce qu'une des unités de commande de fonction (9 à 12, 42 à 44, 45, 46, A8) des alimentateurs est désignée pour être l'unité maîtresse de commande de fonction dans le réseau.

3. Dispositif selon la revendication 1, caractérisé en ce que l'unité maîtresse de commande de fonction est incluse dans le réseau en supplément des unités de commande de fonction des alimentateurs du groupe.

4. Dispositif selon les revendications 1 à 3, caractérisé en ce qu'au moins une unité de commande de fonction est équipée d'au moins un micro-ordinateur.

5. Dispositif selon la revendication 1, caractérisé en ce que chaque alimentateur est équipé d'un dispositif de mesure de fil servant à mesurer sa consommation de fil individuelle, par exemple, la quantité de fil consommée par unité de temps, et en ce que le dispositif de mesure est connecté à l'unité de commande de fonction ou au réseau pour fournir une information sur la consommation de fil individuelle mesurée de l'alimentateur.

6. Dispositif selon au moins une des revendications 1 à 5,
caractérisé en ce que chaque unité de commande de fonction est connectée à une connexion (26, 27, A16, A17) qui fait partie du réseau et qui est adaptée pour la transmission série et numérique des messages dans le système informatisé (2),
en ce que des messages (40, 41) transmis à l'intérieur du système sont classés avec des priorités différentes,
en ce que les unités et la connexion sont adaptées pour discriminer la transmission des messages effectuée et pour maintenir un temps de transmission entre l'unité de commande de fonction d'un maximum de 2,0 ms pour au moins trois messages différents de plus haute priorité et d'une longueur de message (L) de 0,05 ms au minimum à une vitesse en bits allant jusqu'à 4 Mbit/s.

7. Dispositif selon au moins une des revendications 1 à 6,
caractérisé en ce que le système informatisé (2) est programmé avec une phase de démarrage et une phase de travail pour transmettre un numéro d'identification et des paramètres opérationnels dans la phase de démarrage à l'unité de commande de fonction de chaque alimentateur, et pour transmettre, dans la phase de travail, des messages ayant la priorité la plus haute en tant que signaux de démarrage ou de déclenchement, ou des messages de transmetteurs de détection du mouvement issus du métier à tisser, des signaux pour l'activation d'éléments d'arrêt des alimentateurs et des messages pour les moniteurs d'arrivée inclus dans le métier à tisser.

Fig. 1

Fig. 2

a        40a  40b  40c        40e        a'
                        40 /

40d        40f

L

Fig. 3

41b        41a        41c        b

41        L'

Fig. 4

42

26'

43

44

Fig. 5

42'

43'

44'

26'

KT        Δt

Δt'

Δt''

KA

Fig. 6

Fig. 7

Fig. 8

13

Fig. 9

A 16

A8"

A7'

A6'

A2"

A2'

A1

A13

A10'

A11

A2

A14

A8

A12

A10

A6

A7

A5

A4

A9

A8'

A15

A5'

A10'

A3'

A17'

A13'

A10"

A11'

A3

A17

A15

EP 0 458 875 B1

14